# EUROPEAN PATENT APPLICATION

(11) **EP 4 501 431 A1**
(43) Date of publication of application: **05.02.2025**
(21) Application number: 23780099.0
(22) Date of filing: 23.03.2023
(51) Int. Cl.: B01D 39/16, H01G 7/02, D04H 3/11, D04H 3/16, B03C 3/28

(54) **ELECTRET AND ELECTRET FILTER**

(30) Priority: 30.03.2022 JP 2022056990
(71) Applicant: TOYOBO MC Corporation, Osaka 530-0001 (JP)
(72) Inventor: NAKAJIMA, Mizuki, Otsu-shi, Shiga 520-0292 (JP); MASUMORI, Tadao, Otsu-shi, Shiga 520-0292 (JP); KITAGAWA, Yoshiyuki, Otsu-shi, Shiga 520-0292 (JP)
(74) Representative: Vossius & Partner Patentanwälte Rechtsanwälte mbB
(86) International application number: PCT/JP2023/011659
(87) International publication number: WO 2023/190089

(57) **Abstract**

The electret of the present invention comprises 90 mass% or more of polyolefin resin; 0.1 to 5 mass% of a hindered phenol compound having an amide bond; and 0.1 to 5 mass% of a nitrogen-containing compound having a hydroxylamine structure.

## Description

### TECHNICAL FIELD

The present invention relates to an electret and an electret filter.

### BACKGROUND ART

To date, a material called electret has been widely used. Electret refers to a series of materials which allow an electrostatic force to be maintained and used without continuously applying external energy, through various operations of various dielectric materials. The electret is used for microphones, sensors, and power generators and for various protection and separation usages by utilizing an electrostatic force with respect to the outside.

For the above-described separation and protection usages, a method in which the electret is used in a planar form like a film, and a method in which functionality is enhanced in combination with separation and filtration usages, etc., of a porous material itself, are known. For example, a filter having a fibrous product used therein is advantageous in that the filter has a high porosity, a long lifespan, and low air-flow resistance, and is thus widely used. The filter formed of the fibrous product captures particles on fiber by a mechanical collecting mechanism such as interruption, diffusion, and inertial impaction. It is known that the filter has the minimum collecting efficiency value in a case where the aerodynamic equivalent diameters of particles captured in a practical use environment are about 0.1 to 1.0 µm. For compensating for the drawback, an electret filter utilizing electrostatic attraction of an electret is used.

It is known that an electret is preferably formed by applying an electrostatic charge to a fibrous product in a method (liquid contact charging method) in which liquid is brought into contact or collision with the fibrous product in order to enhance the collecting efficiency of the electret filter. For example, an electret in which an electrostatic charge is applied by bringing, into contact with liquid such as water, a fibrous product formed of a mixture in which a nitrogen-containing compound such as a hindered-amine-based compound is added to resin that contains polyolefin resin as a main component, is known as an electret having a good balance between cost and performance.

Patent Documents 1 to 3 disclose an electret web in which a fibrous product that contains polyolefin resin as a main component is charged by the liquid contact charging method. Patent Document 1 discloses a nonwoven electret web including fiber produced from a thermoplastic polymer material. The thermoplastic polymer material includes a polymer, a first additive (a) for trapping electric charge generated in the fiber by treatment with polar liquid, and a second additive (b) including organic amide derived from carboxylic acid having 29 to 50 carbon atoms and aliphatic amine having one or two primary and/or secondary amino groups and 1 to 6 carbon atoms in an aliphatic group. Patent Document 2 discloses an electret material in which a reinforcing material is stacked on a carrier carrying fluorine and having an electrostatic charge applied thereto. Patent Document 3 discloses an electret web including thermoplastic resin and a predetermined electric charge enhancing additive.

### PRIOR ART DOCUMENTS

### PATENT DOCUMENTS

Patent Document 1: Japanese Patent No. 6346640
Patent Document 2: Japanese Unexamined Patent Application Publication No. 2018-202369
Patent Document 3: International Publication No. 2017-007675

### SUMMARY OF THE INVENTION

### PROBLEMS TO BE SOLVED BY THE INVENTION

However, there is a problem that a hindered-amine-based compound which has been widely added to conventionally known electrets causes degradation of the quality such as offensive odor and fly due to pyrolysate. In the electret, an electrostatic force maintained by the electret, that is, electric charge, may be attenuated due to heat treatment during processing or the like. In order to suppress attenuation of electric charge, an antioxidant may be contained, but attenuation of electric charge may not be sufficiently suppressed.

Therefore, the present invention provides a novel electret and a novel electret filter that achieve both productivity and electric charge stability which cannot be achieved by conventionally known electrets.

### SOLUTION TO THE PROBLEMS

The inventors of the present invention have found, as a result of thorough studies, that, in a case where specific compounds are added in combination to a polyolefin resin and the obtained product is electrically charged by a liquid contact method, an electret and an electret filter which have excellent processability and electric charge stability can be obtained, and have achieved the present invention.

That is, the present invention has the following configuration.
1. An electret comprising: 90 mass% or more of polyolefin resin; 0.1 to 5 mass% of a hindered phenol compound having an amide bond; and 0.1 to 5 mass% of a nitrogen-containing compound having a hydroxylamine structure.
2. The electret according to the above 1., wherein a performance retention rate at 100°C is 0.8 or more.
3. The electret according to the above 1. or 2., wherein the electret is a sheet-like product which is produced by a melt blowing method.
4. The electret according to any one of the above 1. to 3., wherein the electret is electrically charged through contact with a liquid.
5. An electret filter comprising the electret according to any one of the above 1. to 4.

### EFFECT OF THE INVENTION

According to the present invention, shot can be suppressed from occurring due to a spinning temperature being increased when fineness is made high in nonwoven fabric and nonwoven fabric is made dense. Furthermore, by using an antioxidant having an amide bond other than an ester bond which is included in a lot of antioxidants, electrostatic charge can be suppressed from being attenuated due to heat. Therefore, according to the present invention, the electret and the electret filter having excellent productivity and electric charge stability can be obtained.

### DESCRIPTION OF EMBODIMENTS

Hereinafter, the present invention will be specifically described. However, the present invention is not limited to the following description and can also be carried out with appropriate modifications being made within the scope of the gist described above and below, and any of these modifications are included in the technical scope of the present invention.

### <Polyolefin resin>

For the electret of the present invention, polyolefin resin having high electric resistance and hydrophobicity is used from the viewpoint of a degree of freedom for shape and electric charge stability of the electret. Examples of the polyolefin resin include homopolymers of olefins such as ethylene, propylene, butylene, hexene, octene, butadiene, isoprene, chloroprene, methyl-1-pentene, and cyclic olefins, and copolymers each formed of two or more of the above-described olefins. As the polyolefin resin, one type of the above may be selected and used alone, or two or more types of them may be selected and used in combination. The polyolefin resin preferably contains at least one selected from the group consisting of polyethylene, polypropylene, and polymethylpentene, and more preferably contains polypropylene. In 100 parts by mass of the electret, a proportion of the polyolefin resin is preferably 80% by mass or more, more preferably 85% by mass or more, further preferably 90% by mass or more, even more preferably 95% by mass or more, and particularly preferably 97% by mass or more. The upper limit of the proportion of the polyolefin resin is not particularly limited and for example, 99.5% by mass or less, preferably 99% by mass or less. As in, for example, sheath/core fiber or side-by-side fiber, in a case where contained resins are different between the left and the right sides of the fiber or between the core and the sheath, only a portion that contains the polyolefin resin serves as the electret of the present invention.

In the polypropylene resin used in the present invention, tacticity is preferably 85% or higher, more preferably 90% or higher, further preferably 90% or higher, and particularly preferably 95% or higher. In this case, either of an isotactic type and a syndiotactic type can be preferably used. When two or more types of polypropylene are used, one or more types are preferably included in the polyolefin in which the polypropylene is contained.

### <Hindered phenol compound having amide bond>

The electret of the present invention includes, in the polyolefin resin, one or more kinds of a hindered phenol compound having at least one amide bond in the molecule. The hindered phenol compound is not particularly limited as long as a characteristic of inhibiting oxidative decomposition of the polyolefin resin due to heat is obtained. The hindered structure may be either a both-sides hindered structure having sterically hindering groups on both sides of a phenolic hydroxy group, or a one-side hindered structure having a sterically hindering group merely on one side of a phenolic hydroxy group, and any of methyl, ethyl, propyl, butyl and an isomer thereof may be preferably used as the sterically hindering group. At least one phenolic moiety is preferably present at the molecule end, and it is also preferable that two or more phenolic moieties are present.

The hindered phenol compound used in the present invention has at least one amide bond in the molecular structure, and bond moieties on both ends of each of a nitrogen atom and a carbon atom of the amide bond are preferably bonded to aliphatic carbon atoms. Bisamide in which the number of amide bonds in the molecule is two, trisamide in which the number of amide bonds in the molecule is three, or an amide in which the number of amide bonds in the molecule is more than three can also be used. Either a linear structure or a branched structure can be preferably used. In a case where the number of amide bonds is two or more, the number of carbon atoms included between an amide group and an amide group preferably ranges from 2 to 50, more preferably ranges from 2 to 30, and further preferably ranges from 2 to 20.

In a case where the number of carbon atoms is excessively small, handling becomes difficult due to compatibility with resin being reduced or chemicals themselves having high melting points. In a case where the number of carbon atoms is excessively large, a blended amount needs to be large.

The hindered phenol compound having an amide bond as used in the present invention has a melting point preferably ranging from 60°C to 300°C, more preferably ranging from 80°C to 280°C, and most preferably ranging from 100°C to 250°C. If the melting point is excessively low, stickiness or dissipation is likely to be generated. If the melting point is excessively high, processability may be degraded. The thermal decomposition temperature is preferably 150°C or higher, more preferably 200°C or higher, further preferably 250°C or higher, and particularly preferably 300°C or higher. If the thermal decomposition temperature is low, a forming process condition or a use environment may be restricted.

The hindered phenol compound having an amide bond as used in the present invention is, for example, preferably available as any of a product synthesized in-house, a reagent, and an industrial raw material, and may be an elemental compound or a mixture. One of compounds available as commercially available reagents or industrial raw materials may be, for example, N,N'-bis3-(3'5'di-t-butyl-4'-hydroxyphenyl)propionyl hexamethylenediamine. For example, Irganox (registered trademark) 1098 (manufactured by BASF Japan Ltd.) for use as an antioxidant in nitrogen-containing polar resins such as polyamide, nylon, and polyurethane is commercially available. However, it has been found in the present invention that, by addition to polypropylene, which is not generally recommended, excellent characteristics can be obtained for enhancing a charge amount and filtering performance in the polyolefin electret. Therefore, characteristics which are different from characteristics obtained by addition of a hindered-phenol-based antioxidant based on ester groups are exhibited. Examples of an available hindered phenol compound having an amide bond include Irganox (registered trademark) MD 1024 manufactured by BASF.

In the electret of the present invention, the content of the hindered phenol compound having an amide bond is preferably 0.1 to 5 mass%, more preferably 0.2 to 3 mass%, and particularly preferably 0.3 to 1.5 mass% while the content of the polyolefin resin is 90 mass% or more. In the electret, in a case where two or more kinds of fibers are mixed or in a case where two or more kinds of resins are mixed in one kind of fiber, the content of the hindered phenol compound having an amide bond refers to a proportion of hindered phenol having an amide bond in the polyolefin resin. Even in a case where a resin other than polyolefin is contained in the electret, the resin other than polyolefin may be dissolved in a solvent or acid/base, or have different dyeability, and thus, the resin can be identified. The polyolefin resin can be identified also by a quantitative method such as DSC and NMR. If the content is less than 0.1 mass%, a charge amount becomes low and filtering properties are thus degraded. If the content is more than 5 mass%, stability as an electret may be lost due to increase of hydrophilicity.

The electret of the present invention includes, in the polyolefin resin, a nitrogen-containing compound having a hydroxylamine structure in addition to the above-described hindered phenol compound having an amide bond. In the present invention, the hindered phenol compound having an amide bond and the nitrogen-containing compound having a hydroxylamine structure are clearly distinguished from each other.

### <Nitrogen-containing compound having hydroxylamine structure>

The nitrogen-containing compound having a hydroxylamine structure as used in the present invention is, for example, preferably available as any of a product synthesized in-house, a reagent, and an industrial raw material as long as a characteristic of inhibiting oxidative decomposition of the polyolefin resin due to heat is obtained, and may be an elemental compound or a mixture. One of compounds available as commercially available reagents or industrial raw materials may be, for example, N,N-dialkylhydroxylamine. For example, Irgastab (registered trademark) FS042 (manufactured by BASF Japan Ltd.) for use as an antioxidant in a polyolefin resin is commercially available.

In the electret of the present invention, the content of the nitrogen-containing compound having a hydroxylamine structure is preferably 0.1 to 5 mass%, more preferably 0.1 to 3 mass%, and particularly preferably 0.3 to 1.0 mass% while the content of the polyolefin resin is 90 mass% or more. In the electret, in a case where two or more kinds of fibers are mixed or in a case where two or more kinds of resins are mixed in one kind of fiber, the content of the nitrogen-containing compound having a hydroxylamine structure refers to a proportion of the nitrogen-containing compound having a hydroxylamine structure in the polyolefin resin. Even in a case where a resin other than polyolefin is contained in the electret, the resin other than polyolefin may be dissolved in a solvent or acid/base, or have different dyeability, and thus, the resin can be identified. The polyolefin resin can be identified also by a quantitative method such as DSC and NMR. If the content is less than 0.1 mass%, a charge amount becomes low and filtering properties are thus degraded. If the content is more than 5 mass%, stability as an electret may be lost due to increase of hydrophilicity.

A ratio between the hindered phenol compound having an amide bond and the nitrogen-containing compound having a hydroxylamine structure is not particularly limited as long as desired characteristics are obtained, but the mass ratio therebetween is preferably 50:1 to 1:50, more preferably 20:1 to 1:20, further preferably 10:1 to 1:10, and particularly preferably 5:1 to 1:5.

The content ratio of the hindered phenol compound having an amide bond and the nitrogen-containing compound having a hydroxylamine structure is not particularly limited as long as desired characteristics are obtained, but the total content of both the compounds is preferably 0.2 to 10 mass%, more preferably 0.3 to 5 mass%, further preferably 0.4 to 4 mass%, and most preferably 0.5 to 3 mass% with respect to the polyolefin resin material.

The hindered phenol compound having an amide bond and the nitrogen-containing compound having a hydroxylamine structure as used in the present invention may be disposed on at least the surface of a formed body of the electret, and can be introduced by applying a solution onto the surface of the formed body, adhering powder, mixing a solution with polyolefin, mixing them during polymerization, melt-mixing them, or the like.

Among them, a melt-mixing method is excellent from the viewpoint of uniformity and processability. A method in which the compounds and the resin are directly mixed when melt-molding is performed for obtaining a final shape can be used, or a prepared additive-containing resin compound can be used as it is or can be diluted and used.

### <Shape of electret>

The electret of the present invention can be formed into any required shape and used as required. For example, the function of the electret can be utilized in the form of a fibrous product, a film, an extrusion-molded material, a porous film, powder, a surface coating layer for another material, or the like. Among them, a fibrous product is particularly preferably used for a filter.

The fibrous product is preferably a fiber aggregate. Examples of the fiber aggregate include fibrous products such as woven/knitted fabrics formed of long fibers or short fibers, nonwoven fabrics, and cotton products, and fibrous products obtained from stretched films. The fiber aggregate refers to a fiber aggregate in a state where the fiber aggregate is confirmed to have a fibrous form when the surface of the electret is observed by a device such as a scanning electron microscope or an optical microscope, and at least a part of fibers of the fiber aggregate are integrated by melting or intertwining between fibers.

When the electret is used as a filter, the fiber aggregate is preferably a nonwoven fabric. As a method of obtaining a nonwoven fabric, employable are conventionally known methods such as methods for forming sheets from single component fibers, composite fibers such as sheath-core fibers and side-by-side fibers, or short fibers such as divided fibers by carding, air-laying, wet paper making methods or the like, methods for forming sheets from continuous fibers by a spun-bonding method, a melt-blowing method, an electro-spinning method, a force-spinning method or the like. Nonwoven fabrics obtained by a spun-bonding method, a melt-blowing method, a melt-electro-spinning method, or a melt-force-spinning method are more preferable due to no necessity of treatment of a remaining solvent and spinning oil that attaches to the surface of fibers, nonwoven fabrics obtained by a spun-bonding method or a melt-blowing method is particularly preferable.

In a case where the electret of the invention is a fibrous product, the average fiber diameter of the fiber used in the fibrous material is preferably 0.001 to 100 µm, more preferably 0.05 to 50 µm, further preferably 0.1 to 30 µm, and particularly preferably 0.3 to 25 µm, and most preferably 0.5 to 20 µm. In a case where the fiber has the average fiber diameter of larger than 100 µm, it is difficult to obtain practical collecting efficiency, and efficiency is significantly reduced when electric charge is attenuated. In a case where the fiber has the average fiber diameter of less than 0.001 µm, production of the electret having electric charge applied thereto is difficult. The fineness is calculated by using a scanning electron microscope by measuring fiber diameters of 50 fibers which do not overlap each other in one visual field to calculate a geometric mean.

In a case where the electret of the invention is a fibrous product, the fibrous product may be a product having a uniform structure obtained by a single production method and a single material, or may be a mixture obtained by using two or more kinds of materials which have different fiber diameters and are produced by different production methods and different materials.

Although an electret forming method of the present invention is not particularly limited as long as characteristics are exhibited as desired when the electret is used. However, in a case where the electret of the invention is a fibrous product, a method (liquid contact charging method) in which the fibrous product is brought into contact or collision with liquid is preferable. By the liquid contact charging method, the electret having enhanced filtering properties can be obtained. More specifically, a method in which the fibrous product is brought into contact or collision with liquid by suctioning, pressure-applying, spouting, or the like, is preferable.

In the liquid contact charging method, the liquid with which the fiber aggregate is brought into contact or collision is not particularly limited as long as characteristics are obtained as desired. In view of handleability and performance, the liquid is preferably water. Instead of water, liquid obtained by adding a sub-component (component other than water) to water may be used, and the electric conductivity and pH of the liquid can be adjusted by, for example, a kind or an amount of the sub-component to be added.

The liquid to be contacted or impinged in the liquid contact charging method preferably has a pH of 1 to 11, more preferably 3 to 9, and further preferably 5 to 7. Furthermore, the liquid to be contacted or impinged in the liquid contact charging method preferably has an electric conductivity of 100 µS/cm or less, more preferably 10 µS/cm or less, and further preferably 3 µS/cm or less.

A filter in which the electret of the present invention is used is also included in the scope of the present invention. In a case where the electret of the present invention is used as a filter, a QF value described below is 1.0 mmAq-1 or more, preferably 1.1 mmAq-1 or more, more preferably 1.2 mmAq-1 or more, further preferably 1.3 mmAq-1 or more, and most preferably 1.4 mmAq-1 or more. The electret filter which is produced by a melt blowing method, which has an average fiber diameter of 0.5 to 5 µm, and which has a QF value more than the above-described QF value, is particularly preferable. If the QF value is less than 1.0 mmAq-1, particles are not sufficiently captured by the electret, and the electret does not sufficiently exhibit performance as a filter. In the description herein, the QF value is calculated on the basis of the number of particles counted in a particle diameter range of 0.3 to 0.5 µm in a laser particle counter and air-flow resistance when air is caused to flow at an air speed of 10 cm/s in the filter thickness direction.

In a case where the electret of the present invention is used as a filter, the particle collecting efficiency at an air speed of 10 cm/s can be adjusted in various ways according to required characteristics, but is preferably 50% or more, more preferably 70% or more, further preferably 90% or more, and particularly preferably 95% or more. In the description herein, the particle collecting efficiency is calculated on the basis of the numbers of particles counted in a particle diameter range of 0.3 to 0.5 µm in a laser particle counter before and after air passes through the filter when air is caused to flow at an air speed of 10 cm/s in the filter thickness direction.

In a case where the electret of the present invention is used as a filter, air-flow resistance at an air speed of 10 cm/s preferably ranges from 0.05 to 50 mmAq, more preferably ranges from 0.2 to 30 mmAq, and particularly preferably ranges from 0.5 to 20 mmAq. If the air-flow resistance is excessively low, the electret does not sufficiently exhibit performance as a filter. If the air-flow resistance is excessively high, advantages as the electret filter are lost.

### <Others>

The electret and the electret filter of the present invention can be used in combination with another constituent member if necessary. That is, the electret of the present invention can be used in combination with a pre-filter layer, a fiber protection layer, a reinforcing member, or a functional fiber layer and the like.

Examples of the pre-filter layer and the fiber protection layer may include spun bond nonwoven fabrics, thermal bond nonwoven fabrics, foamed urethane, and the like, and examples of the reinforcing member may include thermal bond nonwoven fabrics, various kinds of nets, and the like. Further, examples of the functional fiber layer may include colored fiber layers for antibacterial purposes, antivirus purposes, and purposes of identification or design.

The electret of the present invention can be used for a wide range of usages. The electret can be suitably used for dustproof masks, dustproof clothes, various air conditioning elements, air cleaners, cabin filters, and filters for protecting various devices, particularly for the purposes of protection, ventilation, anti-fouling, waterproofing, and the like.

### EXAMPLES

An example and comparative examples of the present invention will be described below. Firstly, test/evaluation methods will be described below.

### (1) Air-flow resistance

A sample having been punched into 72 mmϕ was attached to an adapter having an effective air flow diameter of 50 mmϕ, a pipe having an inner diameter of 50 mm and having a micro differential pressure gauge connected thereto was connected to each of the upper and the lower sides, air was caused to flow at an air speed of 10 cm/s in the sample thickness direction, and a difference in pressure between the upper and the lower sides of the sample without throttling was measured as air-flow resistance (pressure loss).

### (2) Particle collecting efficiency and particle penetration rate

A sample having been punched into 72 mmϕ was attached to an adapter having an effective air flow diameter of 50 mmϕ, air was caused to flow at an air speed of 10 cm/s in the sample thickness direction, and particle collecting efficiency was measured by the following method with use of a light-scattering type particle counter KC-01E manufactured by Rion Co., Ltd.
Evaluated particles: atmospheric dust particles
Air speed: 10 cm/s Particle collecting efficiency [%] = (1-(the number concentration of particles having particle diameters of 0.3 to 0.5 µm after penetration of the particles through the sample/the number concentration of particles having particle diameters of 0.3 to 0.5 µm before penetration of the particles through the sample)) × 100 Particle penetration rate = (the number concentration of particles having particle diameters of 0.3 to 0.5 µm after penetration of the particles through the sample/the number concentration of particles having particle diameters of 0.3 to 0.5 µm before penetration of the particles through the sample)

### (3) Filter quality factor (QF)

The QF value was obtained according to the following formula by using the values of the air-flow resistance measured in the above-described (2) and the particle penetration rate measured in the above-described (3). QF [mmAq-1] = - [ln (1-(particle collecting efficiency (%)/100))]/[air- flow resistance (mmAq)]

### (4) Weight per unit area

Samples each having a diameter of 72 mmϕ were collected at three points, the weight of each sample was measured, and the obtained value was converted to a value per unit area, and thereafter, the first decimal place of the arithmetic mean was rounded to obtain the weight per unit area.

### (5) Average fiber diameter

Five points of the sheet sample were discretionarily selected, and the diameter of a monofilament was measured at n=20 by using an electron microscope, and the average fiber diameter was obtained as the arithmetic mean.

### (6) Electric charge stability

The sample used in the above-described (2) was wrapped with aluminum foil, and was thereafter left as it was in a dryer having been set to 80°C for 30 minutes. Thereafter, the particle penetration rate was measured by the same method as for the above-described (2). The same operation was sequentially conduced at 100°C and 120°C in this order.

### (7) Occurrence of shot

Five points of the sheet sample were discretionarily selected, and whether a non-fibrous resin lumpy object (shot) was present or absent was observed by using an optical microscope.

### <Example 1>

A product obtained by adding 1 mass% of Irganox (registered trademark) 1098 manufactured by BASF as the hindered phenol compound having an amide bond, and 0.5 mass% of N,N-dialkylhydroxylamine as the nitrogen-containing compound having a hydroxylamine structure, to 98.5 mass% of a polypropylene homopolymer having a melt flow rate (MFR) of 1300 g/10 minutes, was spun at a nozzle temperature of 300°C and an air temperature of 280°C by using a melt blowing device, to obtain a fiber sheet having a weight per unit area of 30 g/m². The obtained fiber sheet was electrically charged by causing water having an electric conductivity of 0.7 µS/cm and a pH of 6.8 to pass from the surface layer to the back surface. Thereafter, the resultant sheet was dried by air at 25°C to obtain an electret sheet. The characteristics were evaluated as a filter from the air-flow resistance and the particle penetration rate.

### <Comparative example 1>

An electret sheet of Comparative example 1 was obtained in the same manner as in Example 1 except that 0.5 mass% of N,N-dialkylhydroxylamine as the nitrogen-containing compound having a hydroxylamine structure was only added to 99.5 mass% of a polypropylene homopolymer having a melt flow rate (MFR) of 1300 g/10 minutes.

### <Comparative example 2>

An electret sheet of Comparative example 2 was obtained in the same manner as in Example 1 except that 1 mass% of Chimassorb (registered trademark) 944 manufactured by BASF as a hindered-amine-based compound was only added to 99 mass% of a polypropylene homopolymer having a melt flow rate (MFR) of 1300 g/10 minutes.

### <Comparative example 3>

An electret sheet of Comparative example 3 was obtained in the same manner as in Example 1 except that 1 mass% of Chimassorb (registered trademark) 944 manufactured by BASF as a hindered-amine-based compound, and 0.5 mass% of N,N-dialkylhydroxylamine were added to 98.5 mass% of a polypropylene homopolymer having a melt flow rate (MFR) of 1300 g/10 minutes.

### <Comparative example 4>

An electret sheet of Comparative example 4 was obtained in the same manner as in Example 1 except that 0.5 mass% of N,N-dialkylhydroxylamine as the nitrogen-containing compound having a hydroxylamine structure, and 1.0 mass% of Irganox (registered trademark) 1010 manufactured by BASF as a hindered phenol compound containing no amide bonds were added to 98.5 mass% of a polypropylene homopolymer having a melt flow rate (MFR) of 1300 g/10 minutes.

### <Comparative example 5>

An electret sheet of Comparative example 5 was obtained in the same manner as in Example 1 except that 1 mass% of Chimassorb (registered trademark) 944 manufactured by BASF as a hindered-amine-based compound, and 0.5 mass% of Irganox (registered trademark) 1098 manufactured by BASF as a hindered phenol compound having amide bonds were added to 98.5 mass% of a polypropylene homopolymer having a melt flow rate (MFR) of 1300 g/10 minutes.

### <Comparative example 6>

An electret sheet of Comparative example 6 was obtained in the same manner as in Example 1 except that 1 mass% of Chimassorb (registered trademark) 944 manufactured by BASF as a hindered-amine-based compound, and 0.5 mass% of Irganox (registered trademark) 1010 manufactured by BASF as a hindered phenol compound containing no amide bonds were added to 98.5 mass% of a polypropylene homopolymer having a melt flow rate (MFR) of 1300 g/10 minutes.

Table 1 indicates the measured values for evaluation for Example 1 and Comparative examples 1 to 6.

**[Table 1]**

| | | Example 1 | Comparative Example 1 | Comparative Example 2 | Comparative Example 3 | Comparative Example 4 | Comparative Example 5 | Comparative Example 6 |
|---|---|---|---|---|---|---|---|---|
| Blending ratio | Irgastab FS042 [mass%] | 0.5 | 0.5 | - | 0.5 | 0.5 | - | - |
| | Irganox 1098 [mass%] | 1 | - | - | - | - | 0.5 | - |
| | Chimassorb 944 [mass%] | - | - | 1 | 1 | - | 1 | 1 |
| | Irganox 1010 [mass%] | - | - | - | - | 1 | - | 0.5 |
| Property value | Weight per unit area [g/m²] | 30 | 30 | 30 | 30 | 30 | 30 | 30 |
| | Particle collecting efficiency [%] | 99.8 | 98.9 | 96.1 | 99.9 | 99.8 | 98.6 | 98.5 |
| | Ln (penetration rate) ratio | 1.0 | 0.7 | 0.5 | 1.0 | 1.0 | 0.7 | 0.7 |
| | QF value [mmAq-1] | 1.86 | 1.45 | 1.30 | 1.93 | 1.79 | 1.63 | 1.46 |
| | QF ratio | 1.0 | 0.8 | 0.7 | 1.0 | 1.0 | 0.9 | 0.8 |
| | Average fiber diameter [µm] | 3.62 | 3.69 | 3.00 | 3.32 | 3.52 | 2.97 | 2.83 |
| Electric charge stability | 80°C ×30 min | 0.9 | 0.7 | 0.8 | 0.8 | 0.9 | 0.9 | 0.9 |
| | 100°C ×30 min | 0.8 | 0.5 | 0.6 | 0.6 | 0.7 | 0.7 | 0.7 |
| | 120°C ×30 min | 0.5 | 0.3 | 0.5 | 0.4 | 0.5 | 0.5 | 0.5 |
| Outer appearance | Occurrence of shot | absent | absent | present | present | absent | present | present |

In the table, an Ln (penetration rate) ratio as a numerical ratio between a natural logarithm (Ln) value of the penetration rate and that of Example 1 (1 in Example 1), and a QF ratio (1 in Example 1) as a numerical ratio of the QF value were calculated and indicated, in order to facilitate comparison of filtering characteristics. In the table, a numerical ratio (value before heat treatment was 1) between a natural logarithm (Ln) value of the particle penetration rate before heat treatment and that after heat treatment at each temperature was also calculated and indicated, in order to compare electric charge stability.

According to the results of Example 1 and Comparative examples 1 to 6, both the QF ratio and the Ln (penetration rate) ratio indicated that the electret of Example 1 including the hindered phenol compound having an amide bond and the nitrogen-containing compound having a hydroxylamine structure had high collecting performance. It is indicated that, since the average fiber diameter of Example 1 was equivalent to or larger than those of the comparative examples, a charge amount and a charge density were large. Furthermore, as compared with Comparative example 3 and Comparative example 4 in which the collecting performance was equivalent to that of Example 1, Example 1 was excellent in collecting performance after heat treatment at 100°C, and this indicated that electric charge stability was high in Example 1. In the electret containing the nitrogen-containing compound having a hydroxylamine structure, shot did not occur as long as no hindered amine compound was contained in the electret. From the foregoing, it was found that, in a case where a fiber sheet containing the hindered phenol compound having an amide bond and the nitrogen-containing compound having a hydroxylamine structure was formed into an electret by a liquid contact charging method, productivity and electric charge stability were excellent.

### INDUSTRIAL APPLICABILITY

The electret of the present invention has excellent productivity and electric charge stability, and can be suitably used for, for example, dustproof clothes, dustproof masks, and filters for air cleaners and the like.

## Claims

1. An electret comprising:
90 mass% or more of polyolefin resin;
0.1 to 5 mass% of a hindered phenol compound having an amide bond; and
0.1 to 5 mass% of a nitrogen-containing compound having a hydroxylamine structure.

2. The electret according to claim 1, wherein a performance retention rate at 100°C is 0.8 or more.

3. The electret according to claim 1, wherein the electret is a sheet-like product which is produced by a melt blowing method.

4. The electret according to claim 1, wherein the electret is electrically charged through contact with a liquid.

5. An electret filter comprising the electret according to claim 1.

6. A method for producing an electret, the method comprising melting and mixing 90 mass% or more of polyolefin resin, 0.1 to 5 mass% of a hindered phenol compound having an amide bond, and 0.1 to 5 mass% of a nitrogen-containing compound having a hydroxylamine structure.
